# EUROPEAN PATENT SPECIFICATION

(11) **EP 2 609 315 B1**
(45) Date of publication and mention of the grant of the patent: **01.04.2015**
(21) Application number: 11770824.8
(22) Date of filing: 07.07.2011
(51) Int. Cl.: F02D 13/02, F02M 25/025, F02M 25/07, F02D 41/00, F02B 47/02, F01N 3/04, F02B 29/04, F02B 37/013, F02M 25/03

(54) **METHOD FOR REDUCING EMISSIONS OF AN INTERNAL COMBUSTION ENGINE AND INTERNAL COMBUSTION ENGINE**
VERFAHREN ZUR VERRINGERUNG DER EMISSIONEN EINES VERBRENNUNGSMOTORS UND VERBRENNUNGSMOTOR
PROCÉDÉ POUR RÉDUIRE LES ÉMISSIONS D'UN MOTEUR À COMBUSTION INTERNE ET MOTEUR À COMBUSTION INTERNE

(30) Priority: 26.08.2010 FI 20105886
(43) Date of publication of application: 03.07.2013
(73) Proprietor: Wärtsilä Finland Oy, 65380 Vaasa (FI)
(72) Inventor: NORDMAN, Vesa, FI-65100 Vaasa (FI)
(74) Representative: Berggren Oy Ab
(86) International application number: PCT/FI2011/050641
(87) International publication number: WO 2012/025662

(56) References cited:
- DE-A1- 2 638 651
- DE-C1- 19 751 664
- FR-A- 573 422
- JP-A- 2007 303 303
- US-A1- 2004 045 283

## Description

### Technical field of the invention

The present invention relates to a method for reducing emissions of an internal combustion engine, which engine comprises at least one cylinder and a reciprocating piston arranged inside the cylinder, as defined in the preamble of claim 1. The present invention also relates to an internal combustion engine comprising at least one cylinder and a reciprocating piston arranged inside the cylinder, as defined in the preamble of claim 11.

### Background of the invention

As the emission standards set more and more stringent requirements for the harmful nitrogen oxide (NOx), carbon monoxide (CO), volatile hydrocarbon (HC), particulate matter (PM) and other emissions of internal combustion engines, engine manufacturers have to find new ways to meet the requirements. At the same time, fuel efficiency of engines should be improved to reduce carbon dioxide (CO₂) emissions and ensure economical operation of engines.

In general, NOx emissions can be reduced by reducing the temperature in the combustion chamber. One way to do this is to apply the so called Miller cycle, which utilizes modified intake closing process. There are two versions of the Miller cycle: In the first version, the intake valve is closed only after bottom dead center, which means that part of the compression stroke is not used for compression. This is often used in spark ignition engines to achieve higher thermal efficiency and a lower tendency to knocking. In the other version of the Miller cycle, early closing of the intake valve is utilized. When the intake valve is closed before the piston arrives at bottom dead center, pressure and temperature in the cylinder will be lower at the end of the compression stroke. This version of the Miller cycle is often used in compression ignition engines. The smaller amount of air in the cylinder due to the early closing of the intake valve is usually compensated by an adequate supercharge ratio.

Another way to reduce NOx emissions of an internal combustion engine is to use exhaust gas recirculation (EGR), where part of the exhaust gas is directed back to the cylinder. Since the heat capacity of the recirculated exhaust gas is higher than the heat capacity of air, the same amount of energy released by combustion leads to lower temperature increase in engines with EGR. Also the lower oxygen mass inside the cylinder and reduction of combustion speed help to achieve lower temperature increase. EGR systems can be either internal or external. In an external EGR system exhaust gas is recirculated from the exhaust manifold to the intake manifold, whereas in an internal EGR system exhaust gas is trapped within the cylinder, or back-flow from the exhaust manifold into the combustion chamber is utilized. The effect of an EGR system can be improved by cooling the recirculated exhaust gas. A drawback of an external EGR system is that impurities must be removed from the exhaust gas before introducing it back into the cylinders. This is the case especially when using heavy fuel oil (HFO). If the impurities are not removed from the recirculated exhaust gas, recirculation might cause damage to intercoolers, turbochargers and other parts of the engine. On the other hand, exhaust gas purifiers make the EGR system more complicated.

Japanese patent application JP 11223137 A discloses an intake and exhaust valve controller for a Miller cycle engine. The invention aims at reducing NOx emissions by temporarily opening the exhaust valve for internal EGR during the intake stroke after the suction valve is closed and there is low pressure in the combustion chamber. Compared to external EGR, a drawback of this kind of internal EGR is that the recirculated exhaust gas cannot be cooled, and therefore the best possible NOx reducing effect is not achieved. Another similar invention shown in US 2004/0045283A*.*

Still another way to reduce NOx emissions is water injection. Water can be injected directly into the combustion chamber or into the intake manifold to lower the temperature in the combustion chamber and thus reduce NOx emissions. Japanese patent application JP 9144606 A discloses an internal combustion engine, where NOx emissions are reduced by external EGR and direct water injection into the combustion chamber. A drawback of direct water injection is that it disturbs combustion and therefore leads to poorer fuel economy.

### Summary of the invention

The object of the present invention is to provide a method that effectively reduces NOx emissions of an internal combustion engine. Another object of the present invention is to provide an internal combustion engine with very low NOx emissions and good fuel efficiency. The characterizing features of the method according to the present invention are given in the characterizing part of claim 1. The characterizing features of the internal combustion engine according to the present invention are given in the characterizing part of claim 11.

According to the present invention, in a method for reducing emissions of an internal combustion engine comprising at least one cylinder, a reciprocating piston arranged inside the cylinder, an intake channel being connected to the cylinder for introducing intake air into the cylinder, an exhaust channel being connected to the cylinder for guiding exhaust gases out of the cylinder, at least one intake valve for opening and closing the connection between the intake channel and the cylinder and at least one exhaust valve for opening and closing the connection between the exhaust channel and the cylinder, the intake valve is closed during the intake stroke at a first predetermined crank angle before the piston reaches bottom dead center for reducing pressure in the cylinder. After closing the intake valve, the exhaust valve is reopened at a second predetermined crank angle to let exhaust gas flow into the cylinder from the exhaust channel. Before the exhaust valve is closed to prevent the exhaust gas from flowing into the cylinder, water is injected into the exhaust channel.

When internal EGR is combined with a Miller cycle and water injection into the exhaust channel, very low NOx emissions can be achieved together with good fuel efficiency. The use of the Miller cycle reduces the peak cylinder temperature, while the recirculated exhaust gas helps to keep the temperature lower during the whole cycle. The injected water evaporates in the cylinder and also reduces temperature. Because of the injection into the exhaust channel, the water mixes well with the intake air and exhaust gas and does not disturb combustion. Even IMO Tier III requirements for NOx emissions can be achieved without selective catalytic reduction. The injected water also helps to keep the exhaust valves clean. Compared to a system with an external EGR, the method is less complicated and avoids the problems of impurities in the exhaust gases. The method can be applied even to engines operating on HFO.

An internal combustion engine according to the present invention comprises at least one cylinder, a reciprocating piston arranged inside the cylinder, an intake channel being connected to the cylinder for introducing intake air into the cylinder, an exhaust channel being connected to the cylinder for guiding exhaust gases out of the cylinder, at least one intake valve for opening and closing the connection between the intake channel and the cylinder, at least one exhaust valve for opening and closing the connection between the exhaust channel and the cylinder, and means for opening and closing the intake valve and the exhaust valve. The intake valve is arranged to be closed at a first predetermined crank angle during the intake stroke before the piston reaches bottom dead center, and the exhaust valve is arranged to be reopened at a second predetermined crank angle after the intake valve has been closed to let exhaust gas flow into the cylinder from the exhaust channel. The engine comprises means for injecting water into the exhaust channel.

According to an embodiment of the present invention, in the method for reducing emissions of an internal combustion engine the water injection is started before the exhaust valve is reopened. With early water injection into the exhaust channel, the water is at least partly mixed with the exhaust gas when the exhaust valve is reopened for the EGR and better mixing is thus achieved.

According to an embodiment of the invention, the water injection is started 170-10 degrees of crank angle before bottom dead center. The starting angle can vary according to the load and rotation speed of the engine. With higher load, earlier water injection timing can be used to achieve sufficient amount of water in the cylinder.

According to an embodiment of the invention, the duration of the water injection is 10-170 degrees of crank angle. According to another embodiment of the invention, the duration of the water injection is 15-60 degrees of crank angle. The duration of the water injection can vary according to the load and rotation speed of the engine. If the engine speed and/or load are high, longer water injection duration can be used to achieve sufficient amount of water in the cylinder.

According to an embodiment of the invention, the mass ratio of the injected water to fuel is 0.7-2.0. With higher engine loads greater amounts of water can be injected into the cylinder.

Characterizing features of other embodiments of the present invention are given in the dependent claims.

### Brief description of the drawings

Figs. 1A-1D show schematically part of the exhaust and intake strokes of an internal combustion engine in accordance with the present invention.
Fig. 2 shows schematically an internal combustion engine with two-stage turbocharging.

### Detailed description of the invention

Some embodiments of the present invention are now described in more detail with reference to the accompanying drawings.

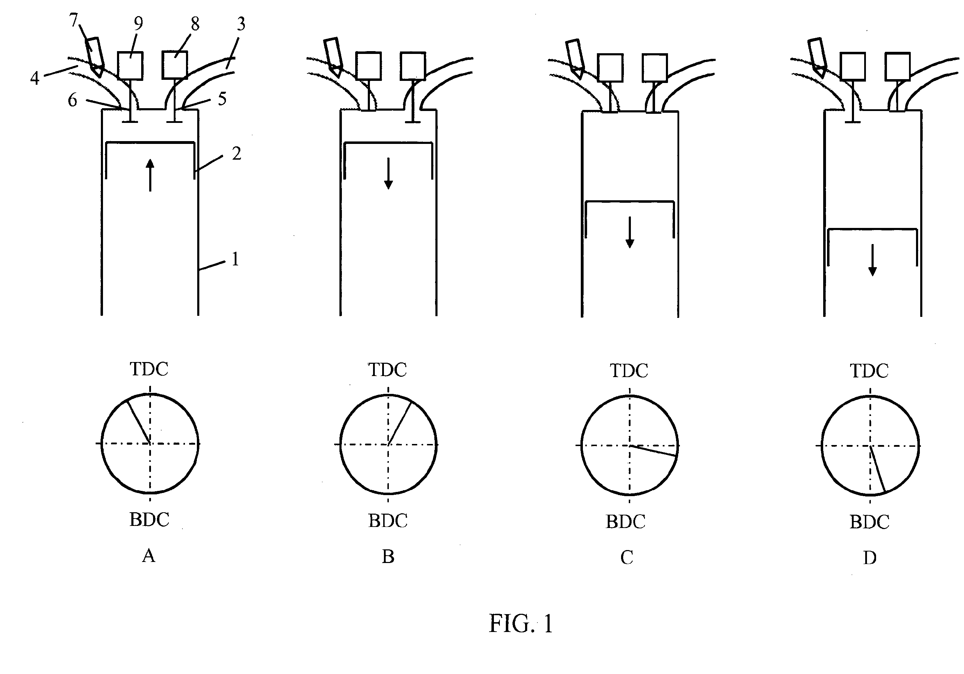

Fig. 1 shows schematically part of an internal combustion engine 10 comprising a cylinder 1, a reciprocating piston 2 that is arranged inside the cylinder 1, an intake channel 3, an exhaust channel 4, an intake valve 5, an exhaust valve 6 and a water injection nozzle 7. Intake air is introduced into the cylinder 1 through the intake channel 3, which is in connection with the cylinder 1 in a conventional manner. The intake channel 3 can be partly inside a cylinder head, and part of the intake channel can be formed of a separate duct. Exhaust gases are guided out of the cylinder 1 through the exhaust channel 4, which is in connection with the cylinder 1. The exhaust channel 4 can be partly inside the cylinder head, and part of the exhaust channel can be formed of a separate duct.

The engine 10 also comprises means 8, 9 for opening and closing the intake valve 5 and the exhaust valve 6. The means 8, 9 for opening and closing the valves can be for instance hydraulic or electrical actuators that can move the gas exchange valves 5, 6 directly or via a lever mechanism or some other arrangement. Only one cylinder 1 is shown, but it is obvious that the engine 10 can comprise any reasonable number of cylinders 1 that can be arranged inline, in V-configuration or in some other configuration. Also the number of gas exchange valves 5, 6 can be different. For instance, there might be two intake valves 5 and two exhaust valves 6 in one cylinder 1. The engine 10 is preferably a four-stroke engine, but it could also utilize a six-stroke cycle. The invention is preferably used in connection with a supercharged compression ignition internal combustion engine, but it could also be utilized in naturally aspirated engines and/or spark ignition engines.

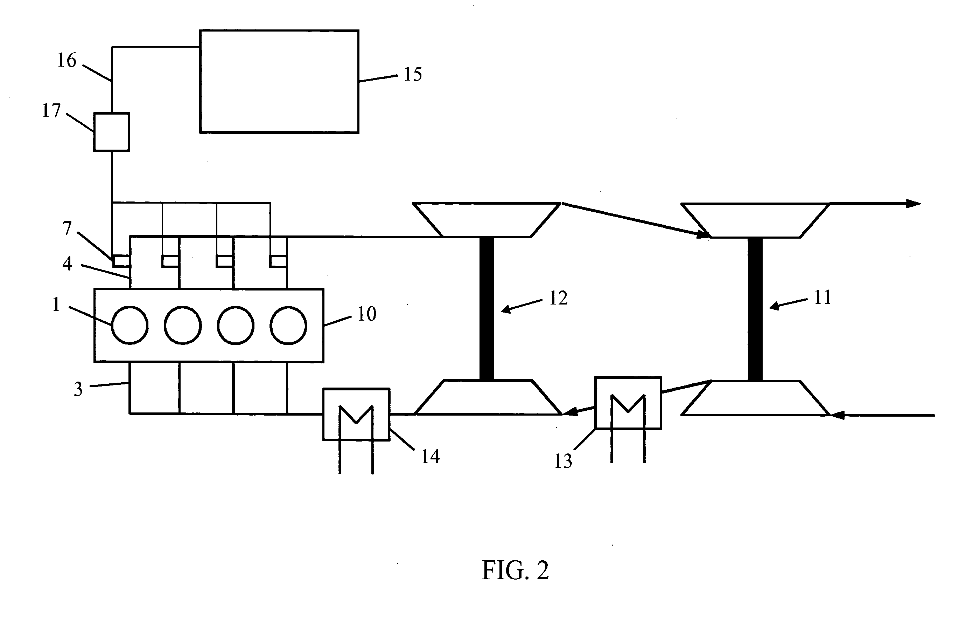

In Fig. 2 is shown an embodiment, where the engine 10 comprises four cylinders 1. The intake air of the engine 10 is supercharged with a low-pressure turbocharger 11 and a high-pressure turbocharger 12. The turbocharging system also comprises two charge air coolers 13, 14.

Fig. 1A shows a situation almost at the end of the exhaust stroke, where the piston 2 is approaching top dead center and the exhaust valve 6 is still open letting the exhaust gas flow into the exhaust channel 4. Also the intake valve 5 has just opened to enhance scavenging.

In Fig. 1B, the piston 2 has passed top dead center and the exhaust valve 6 has just been closed while the intake valve 5 is open and the cylinder 1 starts to fill with fresh air. At this stage, pressure in the cylinder 1 is slightly lower than in the intake channel 3 due to the flow resistance of the valve port.

Fig. 1C shows how the intake valve 5 has been closed during the intake stroke before bottom dead center. Because both the intake valve 5 and the exhaust valve 6 are closed and the piston 2 is still moving downwards towards bottom dead center, pressure in the cylinder 1 starts to drop. Early closing of the intake valve 5 means that the compression ratio is lower than the expansion ratio and the cylinder temperature is reduced at the end of compression. The optimum timing for the closing of the intake valve depends on several factors, such as the engine construction, charge pressure, engine load and speed, etc. The earlier the intake valve 5 is closed, the more the cylinder temperature and NOx emissions are reduced. However, early closing of the intake valve 5 also means lower engine output, if the early closing of the intake valve 5 is not compensated by higher charge pressure. The latest possible timing for the closing of the intake valve 5 depends on the intake and exhaust pressures. The intake valve 5 must be closed early enough for reducing the cylinder pressure under the exhaust pressure so that exhaust gases can flow from the exhaust channel 4 into the cylinder 1. The intake valve 1 is typically closed 100-30 degrees of crank angle before bottom dead center, but also earlier or later closing is possible.

In Fig. 1D, the piston 2 approaches bottom dead center and the exhaust valve 6 has been opened. The crank angle at which the exhaust valve 6 is opened depends on many different factors. The pressure in the cylinder 1 should be lower than the pressure in the exhaust channel 4 when the exhaust valve 6 is opened, otherwise the exhaust gas does not flow into the cylinder 1. The optimum timing for the exhaust valve opening depends on several factors, such as the desired amount of recirculated exhaust gas, cylinder pressure, exhaust pressure, and valve design. The crank angle range over which the exhaust valve 6 is kept open depends on similar factors. Typically, the exhaust valve 6 is opened 90-10 degrees before bottom dead center and kept open for 10-90 degrees of crank angle. However, in some cases it could be possible to open the exhaust valve 6 after bottom dead center.

When the exhaust valve 6 is opened, the pressure in the cylinder 1 must be lower than the pressure in the exhaust channel 4. Because of the pressure difference between the exhaust channel 4 and the cylinder 1, exhaust gas flows into the cylinder 1. This recirculated exhaust gas has higher heat capacity than air, and therefore the combustion of a certain amount of fuel will lead to smaller temperature increase than without exhaust gas recirculation. The exhaust valve 6 can be kept open even during the beginning of the compression stroke. If the intake valve 5 is closed very early during the intake stroke, for instance 50-90 degrees of crank angle before bottom dead center, the pressure in the cylinder 1 will be lower than the pressure in the exhaust channel 4 for a relatively long time after the piston 2 has passed bottom dead center. Exhaust gases can thus flow from the exhaust channel 4 into the cylinder 1 at the beginning of the compression stroke, if the exhaust valve 6 is kept open.

Before the exhaust valve 6 is closed again, water is injected into the exhaust channel 4 through the water injection nozzle 7. The nozzle 7 is located downstream from the exhaust valve 6 in the normal flow direction of the exhaust gases. The nozzle 7 is in the proximity of the exhaust valve 6 and points towards the cylinder 1. In Fig. 2 is shown a tank 15 for storing the water and a delivery duct 16 and pump 17 for delivering the water to the nozzles 7. The water injection can be started already before the exhaust valve 6 is opened. This allows the use of longer injection durations. The starting crank angle for the water injection depends on the crank angles at which the exhaust valve 6 is opened and closed. Also the engine load and speed and the type of the water injection nozzle 7 affect the optimum crank angle for starting the injection and the crank angle range over which the water is injected. If the capacity of the injection nozzle 7 is low, longer injection duration is needed. High engine load also requires longer injection duration than lower engine loads. Typically, the water injection is started 170-10 degrees before bottom dead center. The crank angle range over which the water is injected into the exhaust channel 4 is typically 10-170 degrees, and more suitably 15-60 degrees. The mass ratio of the injected water to the fuel is typically 0.7-2.0. The water injection does not have to take place entirely during the intake stroke, but it can extend to the beginning of the compression stroke. In that case, also the exhaust valve 6 must be kept open over bottom dead center.

The injected water flows together with the exhaust gas into the cylinder 1 past the exhaust valve 6 and mixes with the exhaust gas. As the water evaporates, it lowers the temperature of the recirculated exhaust gas and helps to keep the cylinder temperature lower. In addition, the injected water keeps the exhaust valve 6 clean from carbon deposit. Since the water is injected into the exhaust channel 4, and not directly into the intake channel 3 or cylinder 1 at the same time with fuel injection, the water is effectively mixed with the fresh air and recirculated exhaust gas and does not disturb combustion.

## Claims

1. A method for reducing emissions of an internal combustion engine (10), which engine comprises
- at least one cylinder (1),
- a reciprocating piston (2) arranged inside the cylinder (1),
- an intake channel (3) being connected to the cylinder (1) for introducing intake air into the cylinder (1),
- an exhaust channel (4) being connected to the cylinder (1) for guiding exhaust gases out of the cylinder (1),
- at least one intake valve (5) for opening and closing the connection between the intake channel (3) and the cylinder (1), and
- at least one exhaust valve (6) for opening and closing the connection between the exhaust channel (4) and the cylinder (1),
in which method
- before the piston (2) reaches bottom dead center during the intake stroke, the intake valve (5) is closed at a first predetermined crank angle for reducing pressure in the cylinder (1), and
- after closing the intake valve (5), the exhaust valve (6) is reopened at a second predetermined crank angle to let exhaust gas flow into the cylinder (1) from the exhaust channel (4),
**characterized** in that before the exhaust valve (6) is closed to prevent the exhaust gas from flowing into the cylinder (1), water is injected into the exhaust channel (4).

2. A method according to claim 1, **characterized** in that the water injection is started before the exhaust valve (6) is reopened.

3. A method according to claim 1 or 2, **characterized** in that the water injection is started 170-10 degrees of crank angle before bottom dead center.

4. A method according to any of claims 1-3, **characterized** in that the duration of the water injection is 10-170 degrees of crank angle.

5. A method according to claim 4, **characterized** in that the duration of the water injection is 15-60 degrees.

6. A method according to any of the preceding claims, **characterized** in that the mass ratio of the injected water to fuel is 0.7-2.0.

7. A method according to any of the preceding claims, **characterized** in that the exhaust valve (6) is kept open for 20-90 degrees of crank angle.

8. A method according to any of the preceding claims, **characterized** in that the exhaust valve (6) is reopened 90-10 degrees before bottom dead center.

9. A method according to any of the preceding claims, **characterized** in that the intake valve (5) is closed 100-30 degrees before bottom dead center.

10. A method according to any of the preceding claims, **characterized** in that the intake air is supercharged.

11. An internal combustion engine (10) comprising
- at least one cylinder (1),
- a reciprocating piston (2) arranged inside the cylinder (1),
- an intake channel (3) being connected to the cylinder (1) for introducing intake air into the cylinder (1),
- an exhaust channel (4) being connected to the cylinder (1) for guiding exhaust gases out of the cylinder (1),
- at least one intake valve (5) for opening and closing the connection between the intake channel (3) and the cylinder (1),
- at least one exhaust valve (6) for opening and closing the connection between the exhaust channel (4) and the cylinder (1), and
- means (8, 9) for opening and closing the intake valve (5) and the exhaust valve (6),
the intake valve (5) being arranged to be closed during the intake stroke at a first predetermined crank angle before the piston (2) reaches bottom dead center, and the exhaust valve (6) being arranged to be reopened at a second predetermined crank angle after the intake valve (5) has been closed to let exhaust gas flow into the cylinder (1) from the exhaust channel (4), **characterized** in that the engine (10) comprises means for injecting water into the exhaust channel (4), before the exhaust valve is closed to prevent the exhaust gas from flowing into the cylinder (1)*.*

12. An internal combustion engine (10) according to claim 11, **characterized in that** the means for injecting water into the exhaust channel comprise a nozzle (7) located downstream from the exhaust valve (6) in the proximity of the exhaust valve (6) and pointing towards the cylinder (1).

13. An internal combustion engine (10) according to claim 11 or 12, **characterized** in that the engine (10) comprises means (11, 12) for supercharging the intake air.

## Patentansprüche

1. Verfahren zum Verringern der Emissionen einer Verbrennungskraftmaschine (10), wobei die Kraftmaschine Folgendes umfasst:
- wenigstens einen Zylinder (1),
- einen hin- und hergehenden Kolben (2), der innerhalb des Zylinders (1) angeordnet ist,
- einen Einlasskanal (3), der mit dem Zylinder (1) verbunden ist, um Ansaugluft in den Zylinder (1) zu leiten,
- einen Auslasskanal (4), der mit dem Zylinder (1) verbunden ist, um Abgase aus dem Zylinder (1) zu leiten,
- wenigstens ein Einlassventil (5) zum Öffnen und Schließen der Verbindung zwischen dem Einlasskanal (3) und dem Zylinder (1) und
- wenigstens ein Auslassventil (6) zum Öffnen und Schließen der Verbindung zwischen dem Auslasskanal (4) und dem Zylinder (1),
wobei in dem Verfahren
- bevor der Kolben (2) während des Ansaugtaktes den unteren Totpunkt erreicht, das Einlassventil (5) bei einem ersten vorbestimmten Kurbelwinkel geschlossen wird, um den Druck in dem Zylinder (1) zu verringern, und
- nach dem Schließen des Einlassventils (5) das Auslassventil (6) bei einem zweiten vorbestimmten Kurbelwinkel wieder geöffnet wird, um Abgas aus dem Auslasskanal (4) in den Zylinder (1) strömen zu lassen,
**dadurch gekennzeichnet, dass**, bevor das Auslassventil (6) geschlossen wird, um zu verhindern, dass das Abgas in den Zylinder (1) strömt, Wasser in den Auslasskanal (4) eingespritzt wird.

2. Verfahren nach Anspruch 1, **dadurch gekennzeichnet, dass** die Wassereinspritzung begonnen wird, bevor das Auslassventil (6) wieder geöffnet wird.

3. Verfahren nach Anspruch 1 oder 2, **dadurch gekennzeichnet, dass** die Wassereinspritzung bei 170-10 Grad Kurbelwinkel vor dem unteren Totpunkt begonnen wird.

4. Verfahren nach einem der Ansprüche 1 bis 3, **dadurch gekennzeichnet, dass** die Dauer der Wassereinspritzung 10-170 Grad Kurbelwinkel beträgt.

5. Verfahren nach Anspruch 4, **dadurch gekennzeichnet, dass** die Dauer der Wassereinspritzung 15-60 Grad beträgt.

6. Verfahren nach einem der vorhergehenden Ansprüche, **dadurch gekennzeichnet, dass** das Massenverhältnis des eingespritzten Wasser zum Kraftstoff 0,7-2,0 beträgt.

7. Verfahren nach einem der vorhergehenden Ansprüche, **dadurch gekennzeichnet, dass** das Auslassventil (6) für 20-90 Grad Kurbelwinkel offen gehalten wird.

8. Verfahren nach einem der vorhergehenden Ansprüche, **dadurch gekennzeichnet, dass** das Auslassventil (6) 90-10 Grad vor dem unteren Totpunkt wieder geöffnet wird.

9. Verfahren nach einem der vorhergehenden Ansprüche, **dadurch gekennzeichnet, dass** das Einlassventil (5) 100-30 Grad vor dem unteren Totpunkt geschlossen wird.

10. Verfahren nach einem der vorhergehenden Ansprüche, **dadurch gekennzeichnet, dass** die Ansaugluft aufgeladen wird.

11. Verbrennungskraftmaschine (10), die Folgendes umfasst:
- wenigstens einen Zylinder (1),
- einen hin- und hergehenden Kolben (2), der innerhalb des Zylinders (1) angeordnet ist,
- einen Einlasskanal (3), der mit dem Zylinder (1) verbunden ist, um Ansaugluft in den Zylinder (1) zu leiten,
- einen Auslasskanal (4), der mit dem Zylinder (1) verbunden ist, um Abgase aus dem Zylinder (1) zu leiten,
- wenigstens ein Einlassventil (5) zum Öffnen und Schließen der Verbindung zwischen dem Einlasskanal (3) und dem Zylinder (1),
- wenigstens ein Auslassventil (6) zum Öffnen und Schließen der Verbindung zwischen dem Auslasskanal (4) und dem Zylinder (1)und
- Mittel zum Öffnen und Schließen des Einlassventil (5) und des Auslassventils (6),
wobei das Einlassventil (5) dafür angeordnet ist, während des Ansaugtaktes bei einem ersten vorbestimmten Kurbelwinkel geschlossen zu werden, bevor der Kolben (2) den unteren Totpunkt erreicht, und das Auslassventil (6) dafür angeordnet ist, bei einem zweiten vorbestimmten Kurbelwinkel wieder geöffnet zu werden, nachdem das Einlassventil (5) geschlossen worden ist, um Abgas aus dem Auslasskanal (4) in den Zylinder (1) strömen zu lassen, **dadurch gekennzeichnet, dass** die Kraftmaschine (10) Mittel zum Einspritzen von Wasser in den Auslasskanal (4), bevor das Auslassventil (6) geschlossen wird, um zu verhindern, dass das Abgas in den Zylinder (1) strömt, umfasst.

12. Verbrennungskraftmaschine (10) nach Anspruch 11, **dadurch gekennzeichnet, dass** die Mittel zum Einspritzen von Wasser in den Auslasskanal eine Düse (7) umfassen, die stromabwärts von dem Auslassventil (6) in der Nähe des Auslassventils (6) angeordnet ist und zu dem Zylinder (1) hin zeigt.

13. Verbrennungskraftmaschine (10) nach Anspruch 11 oder 12, **dadurch gekennzeichnet, dass** die Kraftmaschine (10) Mittel (11, 12) zum Aufladen der Ansaugluft umfasst.

## Revendications

1. Procédé pour réduire les émissions d'un moteur à combustion interne (10, ledit moteur comprenant
- au moins un cylindre (1),
- un piston à mouvement alternatif (2) disposé à l'intérieur du cylindre (1),
- un conduit d'admission (3) étant raccordé au cylindre (1) pour introduire l'air d'admission dans le cylindre (1),
- un conduit d'échappement (4) étant raccordé au cylindre (1) pour guider les gaz d'échappement hors du cylindre (1),
- au moins une soupape d'admission (5) pour ouvrir et fermer le raccordement entre le conduit d'admission (3) et le cylindre (1), et
- au moins une soupape d'échappement (6) pour ouvrir et fermer le raccordement entre le conduit d'échappement (4) et le cylindre (1),
procédé dans lequel
- avant que le piston (2) n'atteigne le point mort bas pendant la course d'admission, la soupape d'admission (5) est fermée à un premier angle de vilebrequin prédéterminé pour réduire la pression dans le cylindre (1), et
- après fermeture de la soupape d'admission (5), la soupape d'échappement (6) est réouverte à un deuxième angle de vilebrequin prédéterminé pour laisser les gaz d'échappement s'écouler dans le cylindre (1) depuis le conduit d'échappement (4),
**caractérisée en ce qu**'avant que la soupape d'échappement (6) ne soit fermée pour éviter aux gaz d'échappement de s'écouler dans le cylindre (1), de l'eau est injectée dans le conduit d'échappement (4).

2. Méthode selon la revendication 1 **caractérisée en ce que** l'injection d'eau est commencée avant que la soupape d'échappement (6) ne soit réouverte.

3. Méthode selon la revendication 1 ou 2 **caractérisée en ce que** l'injection d'eau est commencée à 170-10 degrés d'angle de vilebrequin avant le point mort bas.

4. Méthode selon l'une quelconque des revendications 1-3 **caractérisée en ce que** la durée de l'injection d'eau a lieu à 10-170 degrés d'angle de vilebrequin.

5. Méthode selon la revendication 4 **caractérisée en ce que** la durée de l'injection d'eau a lieu à 15-60 degrés.

6. Méthode selon l'une quelconque des revendications précédentes **caractérisée en ce que** le rapport de masse entre l'eau injectée et le carburant est de 0,7-2,0.

7. Méthode selon l'une quelconque des revendications précédentes **caractérisée en ce que** la soupape d'échappement (6) est maintenue ouverte pour 20-90 degrés d'angle de vilebrequin.

8. Méthode selon l'une quelconque des revendications précédentes **caractérisée en ce que** la soupape d'échappement (6) est réouverte 90-10 degrés avant le point mort bas.

9. Méthode selon l'une quelconque des revendications précédentes **caractérisée en ce que** la soupape d'admission (5) est fermée 100-30 degrés avant le point mort bas.

10. Méthode selon l'une quelconque des revendications précédentes **caractérisée en ce que** l'air d'admission est suralimenté.

11. Moteur à combustion interne (10) comprenant
- au moins un cylindre (1),
- un piston à mouvement alternatif (2) disposé à l'intérieur du cylindre (1),
- un conduit d'admission (3) étant raccordé au cylindre (1) pour introduire l'air d'admission dans le cylindre (1),
- un conduit d'échappement (4) étant raccordé au cylindre (1) pour guider les gaz d'échappement hors du cylindre (1),
- au moins une soupape d'admission (5) pour ouvrir et fermer le raccordement entre le conduit d'admission (3) et le cylindre (1),
- au moins une soupape d'échappement (6) pour ouvrir et fermer le raccordement entre le conduit d'échappement (4) et le cylindre (1), et
- des moyens (8, 9) pour ouvrir et fermer la soupape d'admission (5) et la soupape d'échappement (6),
la soupape d'admission (5) étant disposée pour être fermée pendant la course d'admission à un premier angle de vilebrequin prédéterminé avant que le piston (2) n'atteigne le point mort bas et la soupape d'échappement (6) étant disposée pour être réouverte à un deuxième angle de vilebrequin prédéterminé après que la soupape d'admission (5) a été fermée pour laisser les gaz d'échappement s'écouler dans le cylindre (1) depuis le conduit d'échappement (4) **caractérisé en ce que** le moteur (10) comprend un moyen pour injecter de l'eau dans le conduit d'échappement (4) avant que la soupape d'échappement ne soit fermée pour éviter aux gaz d'échappement de s'écouler dans le cylindre (1).

12. Moteur à combustion interne (10) selon la revendication 11 **caractérisé en ce que** le moyen pour injecter de l'eau dans le conduit d'échappement comprend une buse (7) située en aval de la soupape d'échappement (6) à proximité de la soupape d'échappement (6) et tournée vers le cylindre (1).

13. Moteur à combustion interne (10) selon la revendication 11 ou 12 **caractérisé en ce que** le moteur (10) comprend des moyens (11, 12) pour suralimenter l'air d'admission.
